# EUROPÄISCHE PATENTSCHRIFT

(11) **EP 2 416 875 B1**
(45) Veröffentlichungstag und Bekanntmachung des Hinweises auf die Patenterteilung: **08.05.2013**
(21) Anmeldenummer: 10712016.4
(22) Anmeldetag: 31.03.2010
(51) Int. Cl.: B01J 2/16, B05B 7/02, B05B 1/04

(54) **VORRICHTUNG ZUM BEHANDELN VON PARTIKELFÖRMIGEM GUT MIT EINER VERTIKAL SPRÜHENDEN SPALTDÜSE**
DEVICE FOR TREATING PARTICULATE PRODUCTS WITH A VERTICALLY SPRAYING SLIT NOZZLE
DISPOSITIF DE TRAITEMENT DE PRODUITS PARTICULAIRES COMPORTANT UNE BUSE À FENTES À PULVÉRISATION VERTICALE

(30) Priorität: 07.04.2009 DE 102009017453
(43) Veröffentlichungstag der Anmeldung: 15.02.2012
(73) Patentinhaber: Hüttlin, Herbert, 79585 Steinen (DE)
(72) Erfinder: Hüttlin, Herbert, 79585 Steinen (DE)
(74) Vertreter: Witte, Weller & Partner
(86) Internationale Anmeldenummer: PCT/EP2010/002049
(87) Internationale Veröffentlichungsnummer: WO 2010/115568

(56) Entgegenhaltungen:
- DE-A1- 4 110 127
- DE-A1- 19 904 147
- DE-A1-102007 025 317
- DE-A1-102007 025 357
- DE-A1-102007 030 862
- DE-C1- 10 129 166

## Beschreibung

Die Erfindung betrifft eine Vorrichtung zum Behandeln von partikelförmigem Gut, mit einer Prozesskammer zum Behandeln des Gutes, sowie mit einem Boden, der aus überlappenden Leitblechen aufgebaut ist, zwischen denen Prozessluft in die Prozesskammer einführbar ist, wobei die Leitbleche derart ausgestaltet sind, dass sich in der Prozesskammer entgegengesetzt gerichtete Produkt- und Prozessluftströmungen ausbilden, die längs einer Aufbruchzone aufeinandertreffen und vertikal nach oben abgelenkt werden, wobei in der Aufbruchzone im Boden eine vertikal nach oben sprühende Spaltdüse angeordnet ist, die einen durch zwei Wände umgrenzten mittigen Flüssigkeitsspalt aufweist, über den die Flüssigkeit abgebbar ist und ferner neben dem mittigen Flüssigkeitsspalts angeordnete Spühluftspälte aufweist, über die Spühluft zum Zerstäuben der Flüssigkeit abgebbar ist.

Eine derartige Vorrichtung ist aus der DE 101 29 166 C1 bekannt.

Diese Vorrichtung zum Behandeln von partikelförmigem Gut weist eine Prozesskammer auf, die einen Boden aufweist, der aus einander überlappenden Leitplatten aufgebaut ist, zwischen denen Schlitze ausgebildet sind. Die Leitplatten sind als Ringbleche ausgebildet, so dass kreisförmige Schlitze vorhanden sind. Die Ringbleche sind dabei so gelegt, dass eine radial äußere von außen nach innen gerichtete erste Strömung und eine radial innere, von innen nach außen gerichtete zweite Strömung an durchdrehender Prozessluft ausgebildet werden. Die beiden oppositären Strömungen treffen längs einer kreisförmigen Aufbruchzone aufeinander und werden in eine vertikal nach oben gerichtete Strömung umgelenkt. Diese Strömungen setzen sich aus der Prozessluft und den von der Prozessluft bewegten Gutteilchen zusammen.

In der Aufbruchzone sind eine oder mehrere vertikal nach oben sprühende Düsen verteilt angeordnet. Die Düse weist einen durch zwei Wände umgrenzten mittigen Flüssigkeitsspalt auf, über den eine Flüssigkeit abgebbar ist. Beidseits des mittigen Flüssigkeitsspaltes sind Sprühluftspälte angeordnet, über die Sprühluft zum Zerstäuben der Flüssigkeit abgebbar ist.

Aus der DE 199 04 147 A1 ist eine Vorrichtung bekannt, bei der die beiden oppositären Strömungen längs eines Durchmessers eines kreisförmigen Bodens aufeinandertreffen. In der entsprechenden Aufbruchzone sind einzelne oder mehrere Düsen zum Versprühen einer Flüssigkeit angeordnet.

Die versprühten Flüssigkeiten haben ein sehr breites Spektrum, sich reichen von dünnflüssig über hochviskos zu klebrig und können mit mehr oder weniger großen Aggregaten an Suspensionspartikeln versehen sein.

Es ist daher einleuchtend, dass bei einer ganz bestimmten vorgegebenen Spaltbreite und Spaltgeometrie einer Düse es schwierig ist, sich auf die unterschiedlichen Eigenschaften dieser unterschiedlichen Flüssigkeiten einzustellen. Üblicherweise zeigen solche Spühdüsen eine ganz bestimmte Spaltbreite, die unveränderlich ist und in einer solchen Breite gewählt wird, etwa im Bereich von 0,1 bis 1,0 mm, der bei einem relativ breiten Spektrum von Flüssigkeiten ein mehr oder weniger gutes Sprühergebnis erlaubt.

Flüssigkeiten, die mit solchen Düsen versprüht werden können, umfassen nicht nur flüssige Substanzen, beispielsweise organische oder wässrige Lösungen, sondern auch Dispersionen, Schmelzen, Suspensionen oder auch fluide Medien, die aus Pulver aufgebaut sind, aber strömungstechnisch den Charakter einer Flüssigkeit aufweisen.

Aus der DE 41 10 127 C2 ist eine Spaltdüse bekannt geworden, die im Flüssigkeitsspalt eine Struktur aufweist, die dafür sorgen soll, dass das Spühergebnis verbessert wird. Diese Struktur bzw. Profilierung besteht dabei aus sogenannten Pfeilenhubflächen.

In der Anwendungspraxis hat sich dies nunmehr aber dahin als nachteilig erwiesen, dass Feststoffanteile von Sprühflüssigkeit sich in den feinen Strukturkanälen absetzen können, dort stellenweise verbacken und schließlich den Flüssigkeitsdurchtritt ganz blockieren.

Es ist Aufgabe der vorliegenden Erfindung, eine Spaltdüse für eine derartige Vorrichtung dahingehend weiter zu entwickeln, dass diese einfach herstellbar und montierbar ist, und die einfach auf unterschiedliche Eigenschaften der Flüssigkeiten anpassbar ist.

Erfindungsgemäß wird die Aufgabe dadurch gelöst, dass im Flüssigkeitsspalt eine kammartige Zwischenlage angeordnet ist, die zwischen den beiden, den Flüssigkeitsspalt umgrenzenden Wände gelegt ist, wobei sich Zähne der Zwischenlage in Richtung einer Mündung des Flüssigkeitsspaltes erstrecken.

Diese Maßnahme hat nun mehrere Vorteile. Zum einen lässt sich die Spaltbreite sehr einfach dadurch variieren, dass unterschiedlich starke kammartige Zwischenlagen zwischen die beiden Wände, die den Flüssigkeitsspalt umgrenzen, gelegt werden.

Zugleich eröffnet diese Zwischenlage die Möglichkeit, ganz definierte Spaltbreiten zu erzielen, ohne dass aufwändige Justierungen durchgeführt werden müssen, denn die Zwischenlage wirkt zugleich als ein Abstandhalter zwischen den den Flüssigkeitsspalt umgrenzenden Wänden.

Auch montagemäßig ist dies einfach durchzuführen, man muss lediglich die beiden Wände voneinander entfernen, die kammartige Zwischenlage entnehmen und beispielsweise durch eine andere mit geringerer oder größerer Stärke zu ersetzen.

Ein Vorteil bezüglich des Sprühergebnisses besteht darin, dass durch unterschiedlich ausgeformte kammartige Zwischenlagen auf die unterschiedlichen Eigenschaften der zu versprühenden Flüssigkeiten einfach reagiert werden kann. Die Flüssigkeit strömt in den Zwischenräumen zwischen den Zähnen der kammartigen Zwischenlage durch den Flüssigkeitsspalt zu dessen Mündung. Durch Variation der Form, der Länge, der Breite, der Zwischenräume zwischen den Zähnen bzw. durch Variation der Form der Zähne können nun für bestimmte zu versprühende Flüssigkeiten optimale Zwischenlagen geschaffen werden.

Ist eine Flüssigkeit relativ dünnflüssig und enthält wenig Feststoffanteile, die zum Verkleben oder zum Verklumpen neigen, können relativ filigrane Zähne bzw. Lücken zwischen den Zähnen vorgesehen sein.

Sollen hochviskose Flüssigkeiten mit einem hohen Feststoffanteil versprüht werden, können die Abstände zwischen den einzelnen Zähnen entsprechend größer oder entsprechend ausgeformt werden, so dass sichergestellt ist, dass auch solche problematischen Flüssigkeiten durch den Flüssigkeitsspalt hindurchgefördert werden können, ohne dass die Gefahr besteht, dass Ablagerungen, Verklumpungen oder gar ganze Blockaden entstehen. Man kann eine solche Spaltdüse mit einem ganzen Satz an kammartigen Zwischenlagern ausliefern, die jeweils optimal für eine bestimmte Flüssigkeitscharakteristik sind, so dass sich der Anwender vor Ort die jeweils optimale kammartige Zwischenlage heranziehen kann. Aufgrund der einfachen Zerlegungs-und Montagemöglichkeit ist ein solches Umrüsten einfach und rasch durchzuführen.

Die kammartige Zwischenlage hat auch den Vorteil, dass eine solche Düse nach Gebrauch sehr einfach gereinigt werden kann, indem beispielsweise die beiden den Flüssigkeitsspalt umgrenzenden Wände voneinander weg bewegt werden und die kammartige Zwischenlage entnommen wird und gereinigt werden kann.

Die Ausrichtung der Zähne in Richtung der Mündung des Flüssigkeitsspaltes ergibt die Möglichkeit, gerichtet und gezielt auch problematische Flüssigkeiten der Mündung des Flüssigkeitsspaltes zuzuführen, so dass dort ein immer gleichmäßig ausgestalteter Flüssigkeitsfilm austritt, der dann durch die aus den Sprühluftspälten austretende Sprühluft in einen gleichmäßigen Flüssigkeitsnebel versprüht wird.

Dies ist insbesondere auf dem Gebiet wichtig, auf dem diese Spaltdüsen überwiegend eingesetzt werden, nämlich im pharmazeutischen Bereich. Je feiner und gleichmäßig verteilter die Flüssigkeit ist, umso besser ist die Möglichkeit, diese ebenfalls möglichst gleichmäßig und fein verteilt auf die Oberflächen des zu behandelnden Gutes zu verbringen. Beim Coaten können dadurch sehr gleichmäßige und fein geschlossene Schichtdicken an Überzügen beispielsweise über Tabletten erzielt werden. Beim Granulieren kann ein Granulat mit einer sehr schmalen Granulatkornverteilung erzielt werden. Sicherlich spielt bei diesen Vorgängen auch die Konstruktion der Apparatur, in der die Spaltdüse eingesetzt ist, eine Rolle, eine Grundvoraussetzung für ein erfolgreiches Behandeln stellt aber eine gleichmäßig versprühte Flüssigkeit dar.

Ein Vorteil beim Betreiben der Vorrichtung besteht darin, dass die vertikal stehende, nach oben sprühende Spaltdüse bei Unterbrechungen oder Störungen im Betrieb bis zur Oberkante des Flüssigkeitsspaltes mit Sprühflüssigkeit gefüllt bleiben kann. Da diese Flüssigkeiten zum Trocknen neigen, besteht die Gefahr, dass die Flüssigkeitskanäle bei Störungen oder Unterbrechungen, bei teilweisem Ab- oder Ausfluss der Sprühflüssigkeit aus dem Spalt, verkleben und vor erneuter Inbetriebnahme gereinigt werden müssen. Die vertikal stehende Anordnung ermöglicht es, den Flüssigkeitsspalt bis zu dessen Oberkante gefüllt zu behalten. Es kann sich allenfalls ein Häutchen an getrockneter Flüssigkeit auf der Oberfläche des Spaltes ausbilden, das aber bei erneuter Inbetriebnahme abgeblasen wird. Selbst bei sehr filigranen Kammstrukturen kann ein Trocknen der Sprühflüssigkeit und somit ein Verbacken der Kämme verhindert werden.

Je nach Ausgestaltung der Aufbruchzone als Kreis oder Gerade sind die Spaltdüsen geradlinig oder gekrümmt.

In einer weiteren Ausgestaltung der Erfindung ist die Zwischenlage zwischen den beiden Wänden eingeklemmt.

Diese Maßnahme hat den Vorteil, dass hier besonders einfach der Flüssigkeitsspalt montiert bzw. zerlegt werden kann, indem nämlich die Zwischenlage einfach zwischen die beiden Wände eingeklemmt wird. Dadurch ist dann auch eine exakt definierte Spaltbreite ohne große Toleranzen vorgegeben. Man muss bedenken, dass bei größeren Apparaturen solche Spaltdüsen eine Länge im Bereich von Metern haben können, die Spaltbreite aber im Bereich zwischen 0,1 und 1,0 mm liegt. Derartige kammartige Zwischenlagen können relativ einfach hergestellt werden, beispielsweise aus metallischen Materialien, indem die Strukturen einfach ausgestanzt oder ausgelasert werden. Derartige dünne Bleche sind dann so flexibel, dass sie problemlos in gekrümmte Spaltdüsen eingesetzt werden können, beispielsweise in kreis- oder kreisabschnittsförmigen Spaltdüsen.

In einer weiteren Ausgestaltung der Erfindung ist die Zwischenlage als plattenförmiges kammartiges Gebilde ausgebildet, das an einem Ende als geschlossener Kammrücken ausgebildet ist, von dem die Zähne abstehen.

Diese Maßnahme hat den Vorteil, dass auch relativ große, d.h. lange Zwischenlagen problemlos hergestellt werden können, die aufgrund des geschlossenen Kammrückens eine ausreichende mechanische Stabilität aufweisen.

In einer weiteren Ausgestaltung der Erfindung ist die kammartige Zwischenlage derart ausgebildet, dass Freiräume zwischen den Zähnen im Bereich des Kammrückens anströmseitige Eintrittsöffnungen in den Flüssigkeitsspalt darstellen.

Diese Maßnahme hat den erheblichen Vorteil, dass auf sehr einfache Weise die Eintrittsöffnungen in das anströmseitige Ende des Flüssigkeitsspaltes gebildet werden.

Wenn man sich einen Flüssigkeitsspalt vorstellt, der durch zwei äußere rechteckförmige Platten umgrenzt ist, wird die kammartige Zwischenlage so montiert, dass sie am anströmseitigen Ende so weit von dem Ende vorsteht, dass einige Freiräume zwischen den Zähnen im Bereich des Kammrückens freiliegen. Über diese Freiräume kann nun die Flüssigkeit in den Flüssigkeitsspalt zwischen den Zähnen eingeführt werden.

Es sind keine zusätzlichen Bohrungen oder Eintrittsöffnungen vorzusehen, die werden durch diese Öffnungen oder Kavernen zwischen den Zähnen im Bereich des Kammrückens bereitgestellt.

In einer weiteren Ausgestaltung der Erfindung weist der Flüssigkeitsspalt einen ausströmseitigen ersten Abschnitt auf, der die von der Dicke der Zwischenlage vorgegebene Spaltbreite aufweist, an den sich anströmseitig ein breiterer zweiter Abschnitt aufweist, in dem die Zwischenlage dicker ausgebildet ist.

Diese Maßnahme hat den erheblichen Vorteil, dass die Zwischenlage in dem anströmseitigen wesentlich dicker ausgebildeten Bereich zwischen die beiden Wände eingespannt werden kann. Hier können relativ hohe Spannkräfte einwirken, ohne dass zu befürchten ist, dass sich die Zwischenlage verformt.

Im ersten ausströmseitigen Abschnitt ist die Zwischenlage entsprechend schmaler ausgebildet und auch entsprechend ist dann der Abstand zwischen den beiden Wänden entsprechend schmal, so dass dann die gewünschte bzw. notwendige geringe Spaltbreite im Bereich von 0,1 bis 1,0 mm zur Verfügung steht.

An der breiteren Basis, also im zweiten Abschnitt kann die Zwischenlage wesentlich breiter, etwa 2 bis 5 mm ausgebildet sein, um die entsprechenden hohen Klemmkräfte aufnehmen zu können. Die Wände weisen dann eine entsprechende Stufe auf.

Dadurch kann sehr flexibel die Spaltbreite variiert werden, indem beispielsweise, wenn man die Spaltbreite um 0,05 mm breiter machen möchte, eine entsprechende um 0,05 mm breiterer Basis zwischen die beiden Wände klemmt.

Dies zeigt besonders beeindruckend die hohe Variabilität gegenüber den zu versprühenden Flüssigkeiten.

In einer weiteren Ausgestaltung der Erfindung ist die Zwischenlage im zweiten Abschnitt ebenfalls als kammartiges Gebilde ausgebildet.

Diese Maßnahme hat den Vorteil, dass durch die kammartige Ausbildung wie zuvor erwähnt die Möglichkeit besteht, Eintrittsöffnungen oder Kavernen zur Verfügung zu stellen, über die die Flüssigkeit zunächst in den zweiten breiteren Abschnitt eintreten kann und von dieser dann in den schmaleren ersten Abschnitt geführt wird.

In einer weiteren Ausgestaltung der Erfindung ist die Zwischenlage aus dem im ersten Abschnitt angeordneten kammartigen Gebilde und dem im zweiten Abschnitt angeordneten weiteren kammartigen Gebilde zusammengesetzt.

Diese Maßnahme hat den Vorteil, dass jeweils im Hinblick auf die zu versprühende Flüssigkeit die optimale kammartige Zwischenlage aufgebaut werden kann, nämlich durch Zusammensetzen von zwei solchen kammartigen Gebilden, die jeweils optimal für Halterungen der Zwischenlage und der Führung der Sprühflüssigkeit ausgebildet sind.

Möchte man beispielsweise bei einer bereits bestehenden Apparatur die Spaltbreite um 0,05 mm verbreitern, wird ein Gebilde eingesetzt, das sowohl an der Basis, also an dem breiteren zweiten Abschnitt als auch im ersten Abschnitt um 0,05 mm dicker ausgebildet ist, so dass keinerlei Änderungen an den Wänden durchgeführt werden müssen.

In einer weiteren Ausgestaltung der Erfindung kann das schmalere kammartige Gebilde in einen Längsschlitz in den Zähnen des breiteren weiteren kammartigen Gebildes eingesetzt werden.

Diese Maßnahme hat den Vorteil, dass die zuvor erwähnte Konstruktion sehr einfach bewerkstelligt werden kann.

So kann zunächst das untere breitere kammartige Gebilde bereitgestellt werden und in dessen Längsschlitz in den Kämmen kann dann das nächste schmalere kammartige Gebilde des ersten Abschnittes eingesetzt werden. Diese beiden Teile können beispielsweise auch zum Reinigen sehr einfach auseinandergenommen und später wieder zusammengefügt werden.

In einer weiteren Ausgestaltung der Erfindung sind, wie zuvor schon erwähnt, die beiden Wände abgestuft ausgebildet und liegen an den Außenseiten der zusammengesetzten kammartigen Zwischenlage an.

Diese Maßnahme hat den Vorteil, dass über die gesamte Innenfläche des Flüssigkeitsspaltes eine Anlage zwischen der Zwischenlage und den Wänden existiert.

In einer weiteren Ausgestaltung der Erfindung bilden die Außenseiten der Wände eine jeweils innere Wand der Sprühluftspälte.

Diese Maßnahme hat den Vorteil, dass durch konstruktiv einfache Maßnahmen, nämlich durch Heranziehen der Außenseite dieser beiden Wände schon eine Wand der äußeren Sprühluftspälte bereitgestellt wird.

In Zusammenhang mit dieser Ausgestaltung ist dann von Vorteil, dass im Abstand zu den Außenseiten der Wände jeweils eine Außenwand angeordnet ist, die jeweils die äußere Wand eines Sprühluftspaltes bildet.

Diese Maßnahme hat nun den erheblichen Vorteil, dass die Düse in ihrem Mündungsbereich aus den vier Wänden aufgebaut werden kann, nämlich den beiden inneren Wänden, die den Flüssigkeitsspalt umgrenzen und den beiden zu deren Außenseiten im Abstand angeordneten Außenwänden.

Man braucht also im Mündungsbereich vier Wände und die Zwischenlage, um die gesamte Mündungscharakteristik der Düse bereitzustellen.

Dies ist durch einfach herzustellende Bauelemente zu bewerkstelligen und die Düse ist entweder zum Umrüsten oder zum Reinigen einfach zu zerlegen und auch wieder zusammenzubauen.

Dies ist insbesondere von Vorteil, wenn die Spaltdüse im pharmazeutischen Bereich eingesetzt wird, indem besonders hohe Anforderungen an die Reinigung solcher Apparaturen gestellt werden.

In einer weiteren Ausgestaltung der Erfindung sind in diesem Zusammenhang die den Flüssigkeitsspalt sowie die Sprühluftspälte umgrenzenden Wände als plattenförmige Bauteile ausgebildet, die auf einer gemeinsamen Basis montiert und verspannt sind.

Wie zuvor erwähnt, werden relativ wenige Bauteile benötigt, um die Düse aufzubauen. Die Montage der vier Wände und deren Verspannung zum Halten der inneren Zwischenlage können hier besonders einfach durchgeführt werden.

In einer weiteren Ausgestaltung der Erfindung ist in Längsrichtung der Spaltdüse gesehen jeweils ein Endstück montiert, die den Körper der Düse an den Längsenden abschließen.

Diese Maßnahme hat mit den zuvor genannten Merkmalen den besonderen Vorteil, dass ein sehr kompakt bauender geschlossener Düsenkörper resultiert, der als solcher einfach gehandhabt und in entsprechende Apparaturen eingesetzt werden kann. Bodenseitig ist der Körper der Düse durch die Basis verschlossen, seitlich durch die Außenwände, die bis zu der Mündung der Sprühluftspälte führen, an den stirnseitigen Längsenden ist der Körper durch die Endstücke abgeschlossen.

In einer weiteren Ausgestaltung der Erfindung sind in den Sprühluftspälten kammzahnartige Nasen angeordnet.

Diese Maßnahme hat den Vorteil, dass diese Nasen es ermöglichen, auch der Sprühluft ein gewisses Richtungsmoment aufzuerlegen, so dass die Sprühluft in einem optimalen Zustand bzw. in einem optimalen Strömungsprofil zur Mündung der Sprühluftspälte strömt.

In einer weiteren Ausgestaltung der Erfindung enden die freien Enden der Zähne der kammartigen Zwischenlage im Abstand zu einer Mündung des Flüssigkeitsspaltes.

Diese Maßnahme hat den Vorteil, dass die Einwirkung der kammartigen Zwischenlage auf die durch den Sprühluftspalt geförderte Flüssigkeit in einem gewissen Abstand vor der Mündung endet, so dass die Flüssigkeit die Mündung als über die gesamte Länge der Spaltdüse gesehen einheitlichen Flüssigkeitsfilm verlässt, der dann durch die Sprühluft alsbald verwirbelt wird.

Bei besonders kritischen Flüssigkeiten mit hohem Feststoffanteil kann man die kammartige Zwischenlage mit einer elektronischen, elektrischen oder pneumatischen Unruhe, einem sogenannten Vibrator, koppeln. Dabei reichen Unruheamplituden von 1/100 mm aus.

In einer weiteren Ausgestaltung der Erfindung weisen die Abschnitte der Außenwände der Spaltdüse, die über den Boden nach oben herausragen und auf die die oppositären Strömungen auftreffen, einen abgerundeten Verlauf aus der horizontalen in die vertikale Richtung auf, um eine sanfte Umlenkung der oppositären Ströme nach vertikal zu unterstützen.

Diese Maßnahme hat den Vorteil, dass die oppositären Strömungen aus Prozessluft und Produktteilchen zielgerichtet und sanft aus der etwa horizontal gerichteten Strömungsrichtung in eine vertikal nach oben gerichtete Strömung umgelenkt werden. Dadurch kann man vorhersagbare und beherrschbare Strömungsverhältnisse im Bereich der Sprühöffnung der vertikal nach oben sprühenden Spaltdüse in dieser Aufbruchzone etablieren.

Dies fördert ein gezieltes und gleichmäßiges Behandlungsergebnis. Insbesondere können dadurch Verwirbelungen im Bereich der Umlenkung der oppositären Strömungen unterdrückt werden, die ein Anbacken von Gutteilchen an der Schlitzdüse in diesem Bereich verursachen könnten.

In einer weiteren Ausgestaltung der Erfindung ist der abgerundete Verlauf kreisförmig.

Diese Geometrie trägt einem besonders sanften und zielgerichteten Übergang bei.

In einer weiteren Ausgestaltung der Erfindung entspricht ein Radius des Kreisbogens des abgerundeten Verlaufes etwa 10% bis 20% eines Radius einer kreisförmigen Aufbruchzone.

Diese Werte konnten empirisch ermittelt werden und stellen ein besonders günstiges Umlenkverhalten bei einer bestimmten Ringgröße einer kreisförmigen Aufbruchzone dar.

In einer weiteren Ausgestaltung der Erfindung ist eine Leitplatte des Bodens beidseits so an die Spaltdüse herangeführt, dass zwischen den abgerundeten Abschnitten der Außenwände der Spaltdüse und dieser Leitplatte ein etwa horizontal gerichteter Prozessluftdurchtrittsspalt ausgebildet ist.

Diese Maßnahme hat den Vorteil, dass über diesen Spalt ganz gezielt durch den Boden hindurch tretende Prozessluft an die Außenseite der Spaltdüse herangeführt und von dieser vertikal nach oben umgelenkt wird.

Diese "reine" Prozessluft, die also noch keine Gutteilchen enthält, dient als eine Art Luft-, Gleit- und Umlenkpolster für die auf die Seitenflanken der Düse auftreffenden oppositären Ströme. Sollten vereinzelte Gutteilchen anhaften, werden diese durch diesen gezielten Prozessluftstrom abgeblasen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird nachfolgend anhand einiger ausgewählter Ausführungsbeispiele in Zusammenhang mit den beiliegenden Zeichnungen näher beschrieben und erläutert. Es zeigen:
- Fig. 1: stark schematisiert einen Vertikalschnitt durch eine Vorrichtung zum Behandeln von partikelförmigem Gut, in der eine erfindungsgemäße Spaltdüse eingebaut ist;
- Fig. 2: eine perspektivische Ansicht eines Abschnittes einer kreisbogenförmig gekrümmten Spaltdüse, wie sie in der Vorrichtung von Fig. 1 eingesetzt ist;
- Fig. 3: eine Explosionsdarstellung der Spaltdüse von Fig. 2;
- Fig. 4: eine weiter vergrößerte ausschnittsweise Darstellung der Explosionsdarstellung von Fig. 3;
- Fig. 5: eine noch weiter vergrößerte ausschnittsweise teilweise geschnittene Explosionsdarstellung, insbesondere der innen liegenden, die Spälte aufbauenden Bauteile;
- Fig. 6: einen stark vergrößerten ausschnittsweisen Vertikalschnitt der Spaltdüse von Fig. 2;
- Fig. 7: perspektivisch einen Medienadapter, auf dem die Spaltdüse montierbar ist, über den die entsprechenden Medien zugeführt werden;
- Fig. 8: einen Vertikalschnitt durch den Zusammenbau von Spaltdüse und Medienadapter im Bereich der Flüssigkeitszuführung; und
- Fig. 9: einen entsprechenden Vertikalschnitt im Bereich der Sprühluftzuführung.

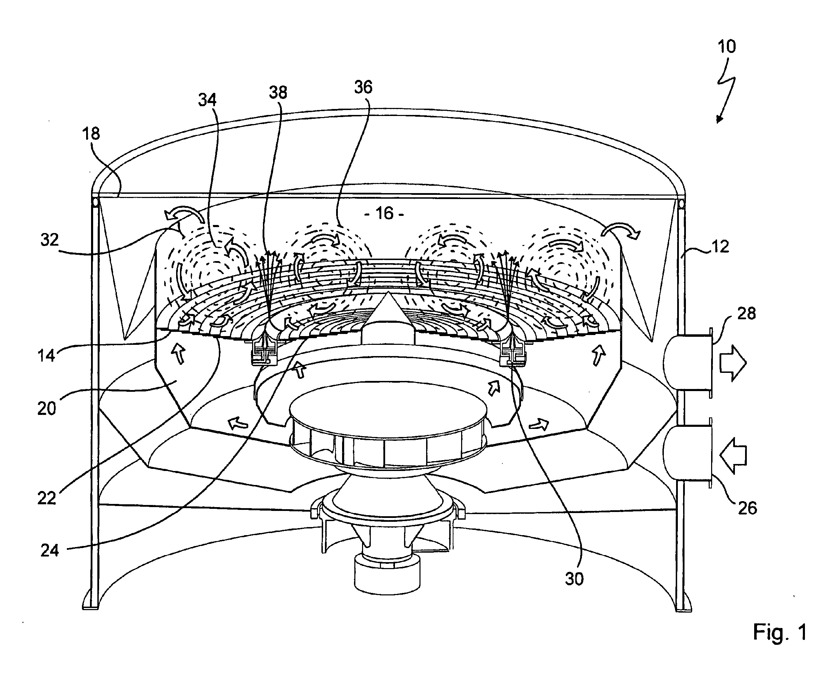

Eine in Fig. 1 dargestellt Vorrichtung zum Behandeln von partikelförmigem Gut ist in ihrer Gesamtheit mit der Bezugsziffer 10 bezeichnet.

Die Vorrichtung 10 weist einen stehenden zylindrischen Behälter 12 auf, der auf mittiger Höhe mit einem Boden 14 versehen ist. Der Innenraum des Behälters 12 stellt eine Prozesskammer 16 dar. Die Prozesskammer 16 ist am oberen Ende durch einen Deckel 18 abgeschlossen. Unter dem Boden 14 ist eine Anströmkammer 20 ausgebildet.

Der Boden 14 setzt sich aus einem ersten umfänglich äußeren Satz 22 an übereinander gelegten Ringblechen zusammen, die so übereinandergelegt sind, dass auf ein radial inneres Ringblech ein durchmessergrößeres nächstes Ringblech gelegt ist, und zwar so, dass sich diese beiden Ringbleche jeweils überlappen. Dadurch wird zwischen zwei übereinandergelegten Ringblechen ein etwa horizontal ausgerichteter Ringspalt ausgebildet. Es ist ferner ein Satz 24 an inneren Ringblechen vorhanden, wobei diese Ringbleche so gelegt sind, dass der kleinste radial innere Ring, der um einen zentralen Kegel gelegt ist, auf einem radial weiter außen liegenden nächsten Ring gelegt ist und diesen dabei überlappt. Die nähere Ausgestaltung eines solchen Bodens ist beispielsweise in der DE 101 29 166 C1 beschrieben, auf deren Inhalt hier ausdrücklich Bezug genommen wird.

Zwischen den beiden Sätzen 22 und 24 an Ringblechen ist eine ringförmige Spaltdüse 30 angeordnet.

Wird der Anströmkammer 20 beispielsweise über einen Stutzen 26 Prozessluft zugeführt, wird diese durch die Anströmkammer 20 an die Unterseiten der beiden Sätze 22 und 24 an Ringblechen geführt. Liegt auf dem Boden 14 ein zu behandelndes partikelförmiges Gut 32, so wird dieses durch die durch die Ringbleche hindurch tretende Prozessluft in einem ganz besonderen Muster verwirbelt.

Wie das durch die Pfeile dargestellt ist, beispielsweise auf der linken Hälfte der Schnittdarstellung von Fig. 1, bildet sich eine Strömung 34 aus, die die Gutteilchen im Bereich in einer Ebene entgegen dem Uhrzeigersinn verwirbelt. Das heißt, die durch den äußeren Satz 22 an Ringblechen hindurch tretende Prozessluft wird etwa horizontal ausgerichtet, zunächst radial nach innen gerichtet, steigt dann nach oben und verlässt das verwirbelte Gut am oberen Ende und tritt in eine Sammelkammer über und wird über einen Abführstutzen 28 wieder abgeführt. Die verwirbelten Gutteilchen fallen aufgrund der Schwerkraft wieder auf in Richtung des Bodens 14 ab, wo sie dann erneut mit Prozessluft beaufschlagt werden.

Auf dem inneren Satz 24 an Ringblechen bildet sich eine entgegengesetzt gerichtete Strömung 36 aus, wie das durch die Pfeile dargestellt ist.

Somit strömt beidseits der Spaltdüse 30 Prozessluft vom Boden nach oben und führt somit die verwirbelten Gutteilchen beidseits an der Mündung der Spaltdüse 30 vorbei. Diesen Bereich bezeichnet man als eine Aufbruchzone.

Aus der Spaltdüse 30 wird, wie das später noch näher erläutert wird, eine Flüssigkeit 38 versprüht, die aus einem mittigen Flüssigkeitsspalt austritt und die über beidseits des Flüssigkeitsspaltes angeordnete Sprühluftspälte zu einem feinen Nebel zerstäubt wird. Diese verstäubte Flüssigkeit 38 stellt dann das Behandlungsmedium für die Gutteilchen 32 dar, um diese entweder zu größeren Agglomeraten zu granulieren oder zu beschichten, indem entweder ein flüssiger Kleber oder Lack den jeweils aufsteigenden Gutteilchen aufgesprüht wird. Unter gleichzeitiger Trocknung haben die aufsteigenden Gutteilchen eine ausreichende Zeit, entweder zu agglomerieren und/oder zu trocknen, um danach wieder in Richtung Boden 14 zu fallen und dann einem weiteren Granulier/-oder Lackiervorgang unterworfen zu werden. Entscheidender Punkt für ein gutes Behandlungsergebnis ist also, wie gut und gleichmäßig die Flüssigkeit aus der Spaltdüse 30 versprüht wird. Dabei soll dies gleichmäßig und über die gesamte Länge der Spaltdüse 30 erfolgen, die bei großen Apparaturen beispielsweise durchaus einen Ring im Bereich eines Umfanges von 1 m darstellen kann.

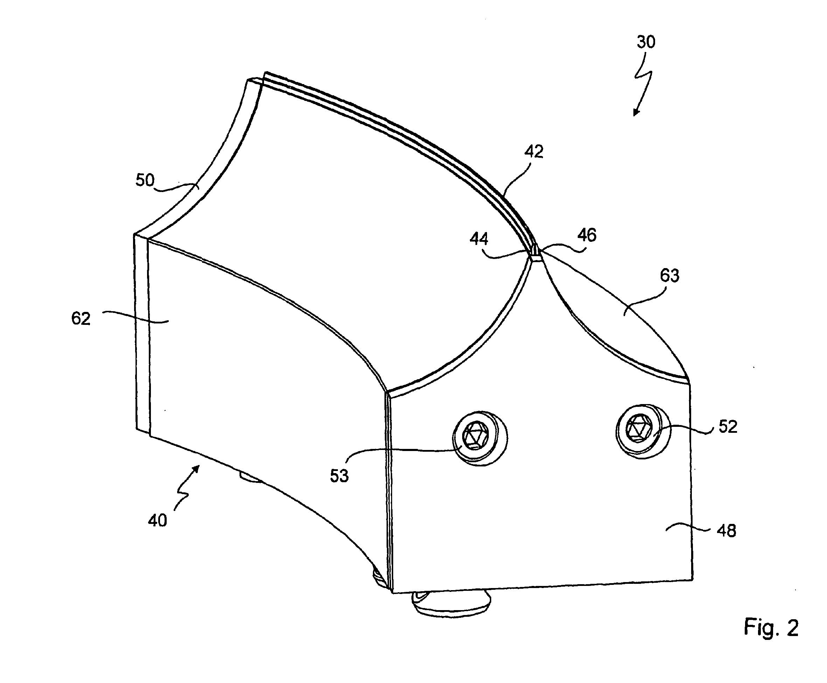

Aus der Darstellung von Fig. 2 ist zu entnehmen, dass die Spaltdüse 30 als ein kompakter geschlossener Körper ausgebildet ist, der als solcher entweder als durchgehender oder als eine Reihe von aneinandergereihten Spaltdüsenkörpern zu der zuvor erwähnten Ringdüse zusammengesetzt werden kann.

Ein Gehäuse der Spaltdüse 30 ist durch zwei Außenwände 62 und 63 gebildet, die stirnseitig über zwei Endstücke 48 und 50 abgeschlossen sind. Am oberen Ende ist ein mittiger Flüssigkeitsspalt 42 vorhanden, der beidseits von Sprühluftspälten 44 und 46 umgrenzt ist.

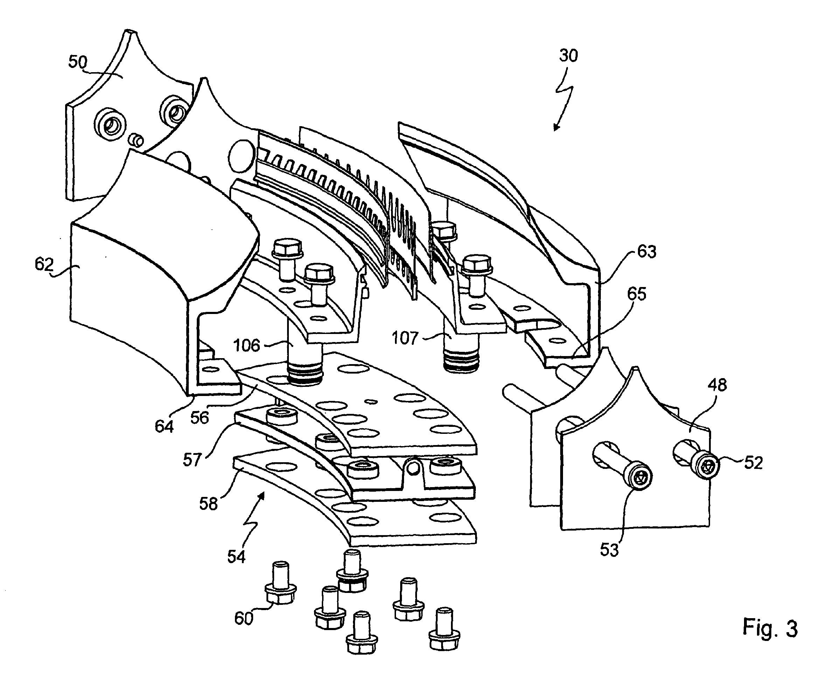

Aus der Explosionsdarstellung von Fig. 3 ist zu erkennen, dass die beiden Endstücke 48 und 50 über Gewindespindeln 52 und 53 aneinandergehalten sind. Dies bedeutet, durch Lösen der Gewindespindeln 52 und 53 kann das Gehäuse 40 stirnseitig geöffnet werden.

Die Außenwände 62 und 63 weisen jeweils am unteren Ende einen Montageflansch 64 bzw. 65 auf, über den diese beiden Außenwände an einer Basis 54 montiert sind.

Die Basis 54 besteht dabei aus drei übereinanderliegenden Montageplatten 56, 57, 58, die über entsprechende Schrauben 60 miteinander verbunden werden.

Somit können die beiden Außenwände 62 und 63 über die Schrauben 60 an der Basis 54 befestigt werden.

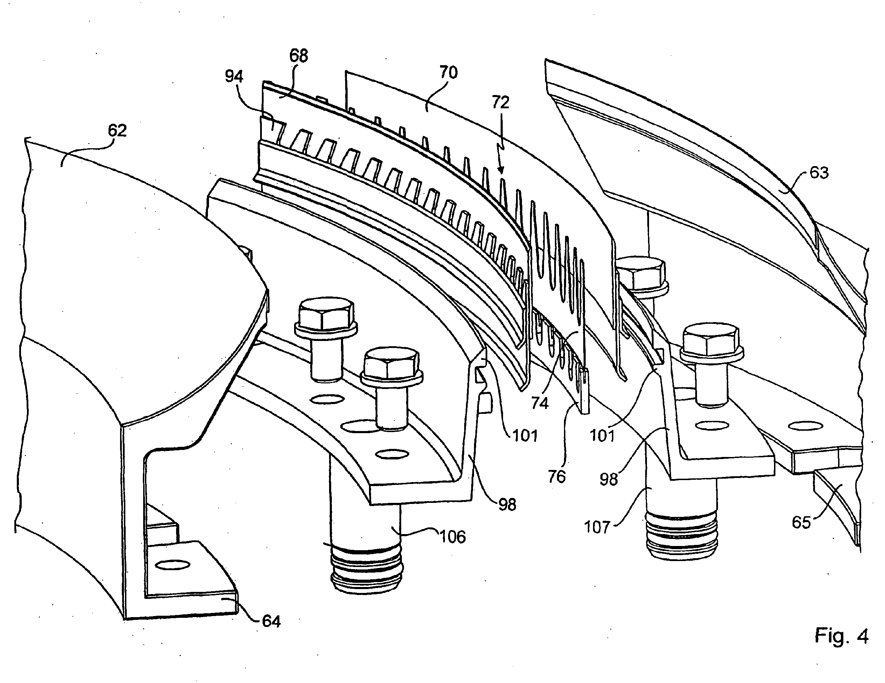

Aus der in Fig. 4 ersichtlichen weiter vergrößerten Darstellung ist zu erkennen, dass zwischen den Außenwänden 62 und 63 weitere Bauteile angeordnet sind.

Dabei handelt es sich zum einen um die Wände 68 und 70, die den Flüssigkeitsspalt 42 umgrenzen. Zwischen den Wänden 68 und 70 ist die kammartige Zwischenlage 72 gelegt.

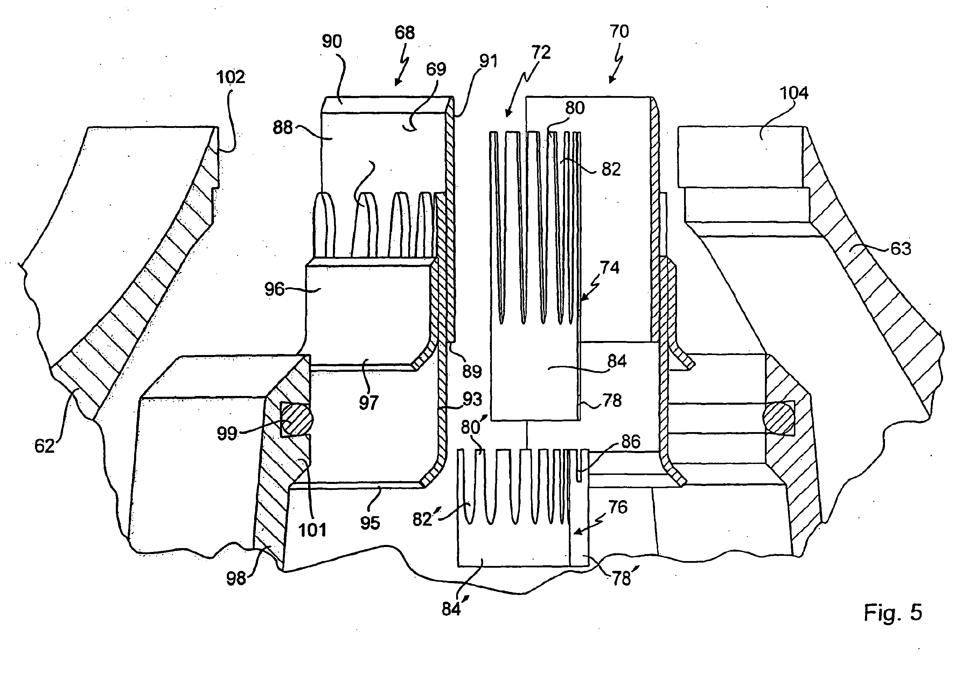

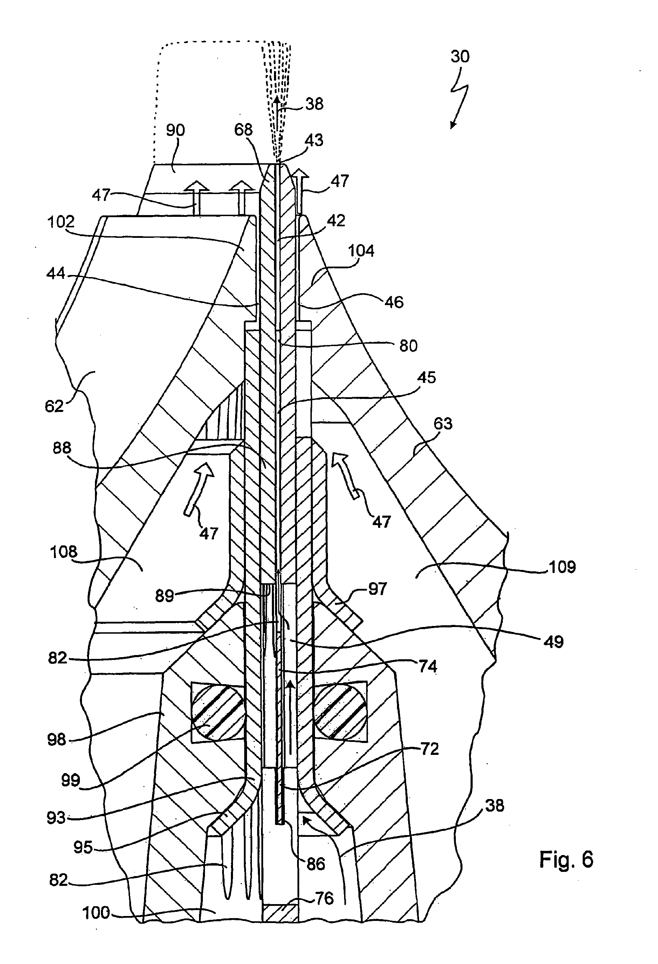

Der nähere Aufbau und der Zusammenbau soll nunmehr zunächst anhand der Fig. 5 und 6 beschrieben werden.

Aus Fig. 5 ist ersichtlich, dass die kammartige Zwischenlage 72 aus einem ersten kammartigen Gebilde 74 und einem zweiten kammartigen Gebilde 76 aufgebaut sind, wobei diese hier in der Explosionsdarstellung voneinander getrennt sind. Das erste kammartige Gebilde 74 besteht in Form einer Platte 78, die eine Vielzahl an Zähnen 80 aufweist, zwischen denen Freiräume 82 vorhanden sind. Die Zähne 80 erstrecken sich in der Plattenebene von einem Kammrücken 84 weg.

Das zweite kammartige Gebilde 76 ist ähnlich aufgebaut, also aus einer Platte, die Zähne 80' und dazwischen Freiräume 82' aufweist, die sich von einem Kammrücken 84' weg erstrecken. Aus der Darstellung von Fig. 5 ist ersichtlich, dass das zweite kammartige Gebilde 76 dicker oder stärker ausgebildet ist, ca. 3 mm und dass sich durch die Zähne 80' ein längs durchgehender Schlitz 86 erstreckt.

Die Breite des Schlitzes 86 ist dabei so gewählt, dass in der Darstellung von Fig. 5 von oben das erste kammartige Gebilde 74 in den Schlitz 86 eingeschoben werden kann, und zwar im Bereich dessen Kammrückens 84.

In der Explosionsdarstellung von Fig. 4 ist dargestellt, wie dieses erste kammartige Gebilde 74 in das zweite kammartige Gebilde 76 eingesteckt ist, und zusammen dann die kammartige Zwischenlage 72 bilden.

Die Dicke oder Stärke des ersten kammartigen Gebildes 74 liegt im Bereich von 0,2 mm. Die Wand 68 und auch die Wand 70, die die Begrenzung des Flüssigkeitsspaltes 42 darstellen, bestehen jeweils aus einer inneren Wandplatte 88, die an ihrem oberen Ende, also dem Mündungsende, an ihrer Außenseite eine Fase 90 aufweisen. Die Innenseite 91 der inneren Wandplatte 88 ist eben und an diese Seite soll eine Seite der kammartigen Zwischenlage 72 angelegt werden. Entsprechendes gilt für die hier nicht näher bezeichnete Innenseite der gegenüberliegenden Wand 70, die entsprechend aber spiegelbildlich ausgebildet ist.

In der stark vergrößerten Explosionsdarstellung von Fig. 5 ist diese Wand 70 nicht näher bezeichnet, um die Zeichnung nicht mit Bezugszeichen zu überfrachten, und sie wird so behandelt als wäre sie eine geradlinig verlaufende Wand.

In der Realität ist diese Wand 70 eine gebogene Wand, wie das aus Fig. 4 ersichtlich ist, letztendlich ist sie auch trotzdem spiegelbildlich aufgebaut, eben spiegelbildlich zu einer gekrümmten Mittelebene.

An der Außenseite 69 der inneren Wandplatte 88 ist eine Zwischenplatte 93 angebracht. Die Zwischenplatte 93 weist an ihrem in der Darstellung von Fig. 5 oberen, also der Mündung zugewandten Ende kammzahnartige Nasen 94 auf. Am unteren Ende ist eine nach außen abstehende Abwinklung 95 vorhanden.

Auf die Außenseite der Zwischenplatte 93 ist eine Außenplatte 96 montiert, die ebenfalls eine nach außen abstehende Abwinklung 97 aufweist, die etwa parallel zu der Abwinklung 95 verläuft.

Wie schon erwähnt, ist die gegenüberliegende Wand 70 im Prinzip spiegelbildlich dazu ausgebildet.

Es ist aus Fig. 5 zu erkennen, dass von der jeweiligen Innenseite 91 der inneren Wandplatte 88 eine Stufe 89 zur entsprechenden Innenseite der Zwischenplatte 93 vorhanden ist.

Wie aus der Explosionsdarstellung von Fig. 4 zu erkennen ist, ist der Wand 68 ein abgewinkelter Spannflansch 98 zugeordnet, der einen Vorsprung 101 aufweist, der so ausgebildet ist, dass er in den Zwischenraum zwischen den beiden Abwinklungen 97 und 95 eintreten kann. Zu Abdichtungszwecken trägt der Vorsprung 101 noch eine Dichtung 99. Der Spannflansch 98 kann ebenfalls an der in Fig. 3 ersichtlichen Basis befestigt werden und er verspannt in Zusammenwirkung mit dem gegenüberliegenden Spannflansch 98 die dazwischen liegenden Bauteile, nämlich Wand 68 und 70 sowie die dazwischengelegte kammartige Zwischenlage 72.

Dieser Bauzustand ist in Fig. 6 dargestellt. In Fig. 6 ist zu erkennen, dass das zweite untere kammartige Gebilde 76 zwischen die Zwischenplatten 93 eingespannt ist, wobei der Druck durch die zuvor beschriebenen Vorsprünge 101 der Spannflansche 98 bewirkt wird. Die Höhenlage des zweiten unteren kammartigen Gebildes 76 ist dabei so, dass einige Öffnungen 82' zwischen den Zähnen 80' unterhalb der Abwinklung 95 zum Liegen kommen.

Der Abstand zwischen den beiden Zwischenplatten 93 entspricht somit der Breite des zweiten kammartigen Gebildes 76. Aus der Fig. 6 ist auch ersichtlich, dass das erste kammartige Gebilde 74, das in den Schlitz 86 des unteren kammartigen Gebildes 76 eingesteckt ist, so ausgebildet ist, dass auch hier Freiräume 82 noch in dem Raum unterhalb der Unterkante, also der Stufe 89 der inneren Wandplatten 88 zum Liegen kommen.

Die überwiegende Länge der Zähne 80 erstreckt sich zwischen diesen beiden inneren Wandplatten 88 und diese enden in einem Abstand vor der Mündung 43 des Flüssigkeitsspaltes 42.

Durch die in Fig. 6 dargestellten Strömungspfeile ist ersichtlich, dass die einer hier nicht näher bezeichneten Vorkammer zugeführte Flüssigkeit 38 durch die Freiräume 82' im unteren kammerartigen Gebilde 76 durch dieses hindurch treten und in den Raum zwischen den Zwischenplatten 93 eintreten kann. Da sich die Freiräume 82 des oberen ersten kammerartigen Gebildes 74 auch bis in diesen Raum hinein erstrecken, kann die Flüssigkeit 38 durch diese Freiräume zwischen den Zähnen 80 hindurch treten und in den eigentlichen Flüssigkeitsspalt 42 zwischen den beiden Innenseiten der inneren Wandplatten 88 eintreten.

Die Strukturierung des kammerartigen Gebildes 72 sorgt dann für die entsprechend gewünschten Strömungsverhältnisse im Flüssigkeitsspalt 42. In einem Abstand vor der Mündung 43 enden die Zähne 80, so dass sich dann die Flüssigkeit zu einem durchgehenden Flüssigkeitsfilm über die gesamte Länge der Spaltdüse 30 wieder vereinigen und ausbilden kann.

Aus Fig. 6 ist ferner zu erkennen, dass die beiden Außenwände 62 und 63 so montiert sind, dass sich Abschnitte 102 und 104 im Abstand zur Außenseite 69 der inneren Wandplatte 88 erstrecken, wodurch die Endabschnitte der beiden Sprühluftspälte 44 und 46 umgrenzt sind.

Im Bereich der kammzahnartigen Nasen 94 sind diese Abschnitte 102 und 104 etwas zurückgesetzt.

Die Sprühluft wird, wie das durch Pfeile 47 in Fig. 6 dargestellt ist, dem Zwischenraum zwischen der Außenseite der Wände 68 und 70 und der Innenseite der Außenwände 62 und 63 zugeführt. Die Sprühluft tritt zwischen die kammzahnartigen Nasen 94 durch und tritt dann in die eigentlichen Sprühluftspälte 44 und 46 ein und dann an der entsprechenden Mündung aus, wie das durch die Pfeile dargestellt ist. Diese Mündung liegt im Abstand zu der Mündung 43 des Flüssigkeitsspaltes 42.

Soll beispielsweise die Spaltbreite des Flüssigkeitsspaltes verändert werden, werden die entsprechend zuvor erläuterten Montageflansche 64 und 65 bzw. die Spannflansche 98 gelöst und die kammartige Zwischenlage 72 kann entnommen werden, und durch eine andere mit einer anderen Stärke ersetzt werden. Bei dieser Gelegenheit kann auch die Geometrie der Zähne 80 bzw. der Freiräume 82 anders ausgestaltet sein, damit sie sich beispielsweise besonders problematischen Flüssigkeiten anpassen können.

Hier ist sehr beeindruckend ersichtlich, wie einfach die Spaltdüse 30 montiert oder zerlegt werden kann. Das gilt ebenfalls für Reinigungszwecke.

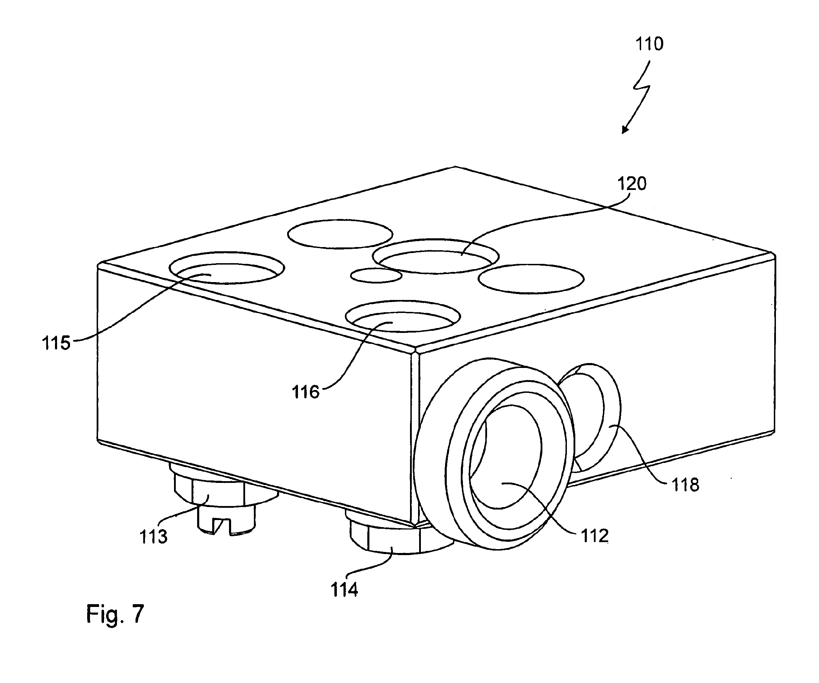

In den Fig. 7 bis 9 ist nunmehr dargestellt, wie die Spaltdüse 30 auf einem zentralen Medienadapter 110, wie er in Fig. 7 dargestellt ist, montiert ist.

Der Medienadapter 110 besteht aus einem kompakten Metallblock, in dem verschiedene Durchtritte und Öffnungen ausgefräst sind. So steht seitlich ein Sprühluftanschluss 112 vor, der zwei Anschlussöffnungen 115, 116 mit Sprühluft versorgt.

In diesem Bereich sind zwei Luftmengeneinstellschrauben 113, 114 vorgesehen, über die die Sprühluftmenge eingestellt werden kann.

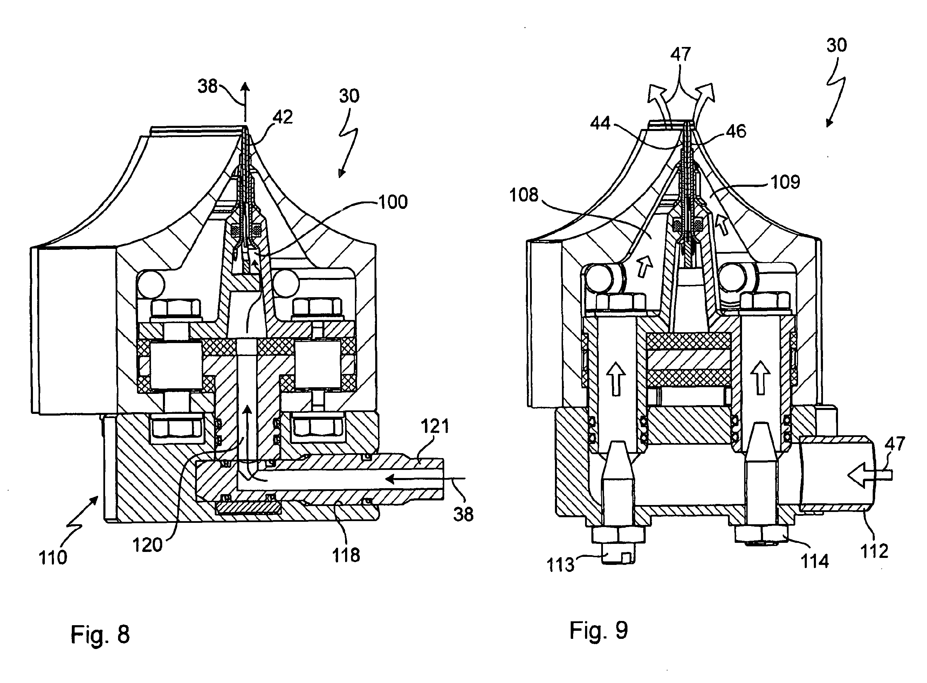

Abseits davon ist ein Sprühflüssigkeitskanal 118 vorgesehen, über den die Sprühflüssigkeit zugeführt werden kann, wozu beispielsweise in diesen Kanal ein Rohr 121, wie es aus Fig. 8 ersichtlich ist, eingesteckt werden kann. Aus der Schnittdarstellung von Fig. 8 ist ersichtlich, wie der Medienadapter 110 an der Unterseite der Spaltdüse 30 montiert ist.

Über das Rohr 121, den entsprechenden Flüssigkeitskanal 118 wird die zu versprühende Flüssigkeit über den Kanal 120 in das innere untere Ende des Bereiches des Flüssigkeitsspaltes 42 durchgeführt, also über eine Art Vorkammer 100, wie sie in Fig. 6 und in Fig. 8 ersichtlich ist. Über diesen zentralen Medienadapter 110 kann die Spaltdüse über ihre gesamte Länge mit der Sprühflüssigkeit versorgt werden, denn die Vorkammer 100 erstreckt sich über die gesamte Länge der Spaltdüse 30.

Aus der Schnittdarstellung von Fig. 9 ist ersichtlich, wie die Sprühluft über den Medienadapter 110 zentral zugeführt wird.

In Fig. 9 ist ersichtlich, dass eine der Luftmengeneinstellschrauben 113 sich in einer anderen eher offenen Position befindet als die Luftmengeneinstellschraube 114. Dadurch ist es möglich, die beiden Sprühluftspälte 44 und 46 mit der entsprechenden Menge an Sprühluft 47 zu versorgen.

Aus der Schnittdarstellung von Fig. 9 ist zu erkennen, dass in die Anschlussöffnungen 115, 116 des zentralen Medienadapters 110 entsprechende Leitungsabschnitte eingeführt sind, die den Zwischenraum zwischen der Außenseite der Wände 68 und 70 bzw. der Innenseite der Außenwände 62 und 63 mit Sprühluft 47 beaufschlagen, wie das in Fig. 6 schon erläutert wurde.

Die zuvor beschriebene Spaltdüse 30 kann nunmehr, wenn sie in die in Fig. 1 eingestellte Vorrichtung 10 eingebaut ist, einen gleichmäßigen Ring an feinst verteilter Sprühflüssigkeit 38 aussprühen und somit eine Grundvoraussetzung für ein hervorragendes Behandlungsergebnis bilden.

Nach einem Einsatz oder zum Umrüsten kann die Spaltdüse 30 einfach zerlegt werden, die Einzelteile können ebenfalls einfach gereinigt und anschließend wieder zusammengesetzt werden.

Die robuste Bauweise stellt aber gleichzeitig exakt definierte Spaltbreiten, und zwar sowohl des Flüssigkeitsspaltes 42 als auch der Sprühluftspälte 44 und 46 bereit, so dass hier keine besondere Aufmerksamkeit oder Nachjustierung von Einstellungen vonnöten sind. Dies ist als ein besonderer Vorteil der Erfindung anzusehen.

Wie insbesondere aus Fig. 1 und 2 zu entnehmen, sind die oberen Abschnitte der Außenwände 62 und 63, die den Boden 14 überragen, etwas kreisförmig gekrümmt ausgebildet. Aus Fig. 1 ist zu entnehmen, dass die jeweils zur Spaltdüse 30 nächste Leitplatte der Sätze an Ringblechen 22 und 24 die gekrümmten Außenwände 62 und 63 etwas überdecken, so dass zwischen der jeweiligen Außenwand 62 und 63 und der Leitplatte ein Prozessluftdurchtrittsspalt ausgebildet ist. Dadurch kann Prozessluft unmittelbar an die gekrümmten Abschnitte der Außenwände 62 und 63 geführt werden. Diese "bläst" die gekrümmten Abschnitte frei und dient als Gleit- und Umlenkpolster für die auftreffenden oppositären Strömungen 34 und 36.

Der Radius der nach innen kreisförmig gekrümmten Abschnitte beträgt etwa 10-20% des Radius der kreisförmigen Aufbruchzone.

## Patentansprüche

1. Vorrichtung zum Behandeln von partikelförmigem Gut, mit einer Prozesskammer (16) zum Behandeln des Gutes, sowie mit einem Boden (14), der aus überlappenden Leitblechen (22, 24) aufgebaut ist, zwischen denen Prozessluft in die Prozesskammer (16) einführbar ist, wobei die Leitbleche (22, 24) derart angeordnet sind, dass sich in der Prozesskammer (16) entgegengesetzt gerichtete Produkt- und Prozessluftströmungen (34, 36) ausbilden, die längs einer Aufbruchzone aufeinandertreffen und vertikal nach oben abgelenkt werden, wobei in der Aufbruchzone im Boden (14) eine vertikal nach oben sprühende Spaltdüse (30) angeordnet ist, die einen durch zwei Wände (68, 70) umgrenzten mittigen Flüssigkeitsspalt (42) aufweist, über den eine Flüssigkeit (38) abgebbar ist, und die ferner neben dem mittigen Flüssigkeitsspalt (42) angeordnete Sprühluftspälte (44, 46) aufweist, über die Sprühluft (47) zum Zerstäuben der Flüssigkeit (38) abgebbar ist, **dadurch gekennzeichnet, dass** im Flüssigkeitsspalt (42) eine kammartige Zwischenlage (72) angeordnet ist, die zwischen den beiden, den Flüssigkeitsspalt (42) umgrenzenden Wände (68, 70) gelegt ist, wobei sich Zähne (80, 80') der Zwischenlage (72) in Richtung einer Mündung (43) des Flüssigkeitsspaltes (42) erstrecken.

2. Vorrichtung nach Anspruch 1, **dadurch gekennzeichnet, dass** die Zwischenlage (72) zwischen den beiden Wänden (68, 70) eingeklemmt ist.

3. Vorrichtung nach Anspruch 1 oder 2, **dadurch gekennzeichnet, dass** die Zwischenlage (72) als plattenförmiges kammartiges Gebilde (74, 76) ausgebildet ist, das an einem Ende als geschlossener Kammrücken (84, 84') ausgebildet ist, von dem die Zähne (80, 80') abstehen.

4. Vorrichtung nach einem der Ansprüche 1 bis 3, **dadurch gekennzeichnet, dass** die Zwischenlage (72) derart ausgebildet ist, dass Freiräume (82, 82') zwischen den Zähnen (80, 80') im Bereich des Kammrückens (84, 84') anströmseitige Eintrittsöffnungen in den Flüssigkeitsspalt (42) darstellen.

5. Vorrichtung nach einem der Ansprüche 1 bis 4, **dadurch gekennzeichnet, dass** der Flüssigkeitsspalt (42) einen ausströmseitigen ersten Abschnitt (45) aufweist, der die von der Dicke der Zwischenlage (72) vorgegebene Spaltbreite aufweist, an den sich anströmseitig ein breiterer zweiter Abschnitt (49) anschließt, in dem die Zwischenlage (72) dicker ausgebildet ist.

6. Vorrichtung nach Anspruch 5, **dadurch gekennzeichnet, dass** die Zwischenlage (72) im zweiten Abschnitt (49) ebenfalls als kammartiges Gebilde (76) ausgebildet ist.

7. Vorrichtung nach einem der Ansprüche 5 oder 6, **dadurch gekennzeichnet, dass** die Zwischenlage (72) aus dem im ersten Abschnitt (45) angeordneten kammartigen Gebilde (74) und dem im zweiten Abschnitt (49) angeordneten weiteren kammartigen Gebilde (76) zusammengesetzt ist.

8. Vorrichtung nach Anspruch 7, **dadurch gekennzeichnet, dass** das schmalere kammartige Gebilde (74) in einen Längsschlitz (86) in den Zähnen (80') des dickeren weiteren kammartigen Gebildes (76) eingesetzt ist.

9. Vorrichtung nach einem der Ansprüche 5 bis 8, **dadurch gekennzeichnet, dass** die beiden Wände (68, 70) abgestuft ausgebildet sind und an den Außenseiten der zusammengesetzten kammartigen Zwischenlage (72) anliegen.

10. Vorrichtung nach einem der Ansprüche 1 bis 9, **dadurch gekennzeichnet, dass** Außenseiten (69) der Wände (68, 70) eine jeweils innere Wand der Sprühluftspälte (44, 46) bilden.

11. Vorrichtung nach Anspruch 10, **dadurch gekennzeichnet, dass** im Abstand zu den Außenseiten (69) der Wände (68, 70) jeweils eine Außenwand (62, 63) angeordnet ist, die jeweils die äußere Wand eines Sprühluftspaltes (44, 46) bilden.

12. Vorrichtung nach einem der Ansprüche 1 bis 11, **dadurch gekennzeichnet, dass** die den Flüssigkeitsspalt (42) sowie die Sprühluftspälte (44, 46) umgrenzenden Wände (68, 70; 62, 63) als plattenförmig Bauteile ausgebildet sind und auf einer gemeinsamen Basis (54) montiert und verspannt sind.

13. Vorrichtung nach Anspruch 12, **dadurch gekennzeichnet, dass** an der Basis (54) ein zentraler Medienadapter (110) angeordnet ist.

14. Vorrichtung nach einem der Ansprüche 1 bis 13, **dadurch gekennzeichnet, dass** in Längsrichtung der Vorrichtung (30) gesehen, jeweils ein Endstück (48, 50) montiert ist, die den Körper (40) der Vorrichtung (30) an den Längsenden abschließen.

15. Vorrichtung nach einem der Ansprüche 1 bis 14, **dadurch gekennzeichnet, dass** in den Sprühluftspälten (44, 46) kammzahnartige Nasen (94) angeordnet sind.

16. Vorrichtung nach einem der Ansprüche 1 bis 15, **dadurch gekennzeichnet, dass** freie Enden der Zähne (80) der kammartigen Zwischenlage (72) in einem Abstand zur Mündung (43) des Flüssigkeitsspaltes (42) liegen.

17. Vorrichtung nach einem der Ansprüche 1 bis 15, **dadurch gekennzeichnet, dass** Abschnitte von Außenwänden (62, 63) der Spaltdüse (30), die über den Boden (14) nach oben herausragen und auf die die oppositären Strömungen (34, 36) auftreffen, einen abgerundeten Verlauf aus einer horizontalen in die vertikale Richtung aufweisen, um eine sanfte Umlenkung der oppositären Ströme (34) und (36) nach vertikal zu unterstützen.

18. Vorrichtung nach Anspruch 17, **dadurch gekennzeichnet, dass** der abgerundete Verlauf der Außenwände (62, 63) kreisförmig ist.

19. Vorrichtung nach Anspruch 18, **dadurch gekennzeichnet, dass** ein Radius des Kreisbogens des kreisförmigen abgerundeten Verlaufes der Außenwände (62, 63) etwa 10% bis 20% eines Radius einer kreisförmigen Aufbruchzone entspricht.

20. Vorrichtung nach einem der Ansprüche 1 bis 19, **dadurch gekennzeichnet, dass** beidseits eine Leitplatte des Bodens (14) so an die gekrümmten Abschnitte der Außenwände (62, 63) der Spaltdüse (30) herangeführt ist, dass zwischen den Außenwänden (62, 63) der Spaltdüse (30) und dieser Leitplatte ein etwa horizontal gerichteter Prozessluftdurchtrittsspalt ausgebildet ist.

## Claims

1. Device for treating particulate material, said device having a process chamber (16) for treating the material, and a bottom (14) that is constructed from overlapping baffle plates (22, 24), between which process air can be introduced into the process chamber (16), wherein the baffle plates (22, 24) are located in such a manner that oppositely directed product and process air flows (34, 36) are formed in the process chamber (16), said product and process air flows meeting one another along a breaking-up zone and being deflected vertically upward, wherein a vertically upward spraying slotted nozzle (30) is located on the bottom (14) in the breaking-up zone, said slotted nozzle including a central liquid slot (42) that is defined by two walls (68, 70), by means of which central liquid slot a liquid (38) can be output, and also including spray air slots (44, 46) that are located next to the central liquid slot (42) and by means of which spray air (47) for atomizing the liquid (38) can be output, **characterized in that** a comb-like intermediate layer (72) is located in the liquid slot (42), said comb-like intermediate layer being placed between the two walls (68, 70) defining the liquid slot (42), wherein teeth (80, 80') of the intermediate layer (72) extend in the direction of a mouth (43) of the liquid slot (42).

2. Device of Claim 1, **characterized in that** the intermediate layer (72) is clamped between the two walls (68, 70).

3. Device of Claims 1 or 2, **characterized in that** the intermediate layer (72) is realized as a plate-shaped, comb-like structure (74, 76) that is realized at one end as a closed comb back (84, 84'), from which the teeth (80, 80') protrude.

4. Device of anyone of Claims 1 to 3, **characterized in that** the intermediate layer (72) is realized in such a manner that free spaces (82, 82') between the teeth (80, 80') in the region of the comb back (84, 84') provide inlet openings into the liquid slot (42) on the inflow side.

5. Device of anyone of Claims 1 to 4, **characterized in that** the liquid slot (42) includes on the outflow side a first portion (45), the slot width of which is predetermined by the thickness of the intermediate layer (72), to which on the inflow side a wider second portion (49) is connected, in which the intermediate layer (72) is thicker.

6. Device of Claim 5, **characterized in that** the intermediate layer (72) is also realized in the second portion (49) as a comb-like structure (76).

7. Device of Claims 5 or 6, **characterized in that** the intermediate layer (72) is composed of the comb-like structure (74) located in the first portion (45) and of the additional comb-like structure (76) located in the second portion (49).

8. Device of Claim 7, **characterized in that** the narrower comb-like structure (74) is inserted into a longitudinal slot (86) in the teeth (80') of the thicker additional comb-like structure (76).

9. Device of anyone of Claims 5 to 8, **characterized in that** the two walls (68, 70) are realized in a stepped manner and abut against the outsides of the assembled comb-like intermediate layer (72).

10. Device of anyone of Claims 1 to 9, **characterized in that** outsides (69) of the walls (68, 70) form in each case an inner wall of the spray air slots (44, 46).

11. Device of Claim 10, **characterized in that** in each case an outside wall (62, 63), which in each case forms the outer wall of a spray air slot (44, 46), is located at a spacing from the outsides (69) of the walls (68, 70).

12. Device of anyone of Claims 1 to 11, **characterized in that** the walls (68, 70; 62, 63) defining the liquid slot (42) and the spray air slots (44, 46) are realized as plate-shaped components and are mounted and clamped on a common base (54).

13. Device of Claim 12, **characterized in that** a central media adapter (110) is located on the base (54).

14. Device of anyone of Claims 1 to 13, **characterized in that**, when viewed in the longitudinal direction of the device (30), an end piece (48, 50) is mounted at each of the longitudinal ends closing off the body (40) of the device (30).

15. Device of anyone of Claims 1 to 14, **characterized in that** comb-teeth-like lugs (94) are located in the spray air slots (44, 46).

16. Device of anyone of Claims 1 to 15_{,} **characterized in that** free ends of the teeth (80) of the comb-like intermediate layer (72) are at a spacing from the mouth (43) of the liquid slot (42).

17. Device of anyone of Claims 1 to 15, **characterized in that** portions of outside walls (62, 63) of the slotted nozzle (30), which protrude upwards above the bottom (14) and at which the opposed flows (34, 36) meet, have a rounded development from a horizontal into the vertical direction in order to support a gentle deflection of the opposed flows (34) and (36) in a vertical direction.

18. Device of Claim 17, **characterized in that** the rounded development of the outside walls (62, 63) is circular.

19. Device of Claim 18, **characterized in that** a radius of the arc of the circular rounded development of the outside walls (62, 63) corresponds approximately to between 10% and 20% of a radius of a circular breaking-up zone.

20. Device of anyone of Claims 1 to 19, **characterized in that** on both sides a baffle plate of the bottom (14) is guided towards the curved portions of the outside walls (62, 63) of the slotted nozzle (30) such that between the outside walls (62, 63) of the slotted nozzle (30) and said baffle plate an approximately horizontally directed process air nozzle aperture is formed.

## Revendications

1. Dispositif de traitement d'une matière particulaire, comprenant une chambre de traitement (16) dévolue au traitement de ladite matière, ainsi qu'un fond (14) constitué par des tôles directrices (22, 24) en chevauchement, entre lesquelles de l'air de processus peut être introduit dans la chambre de traitement (16), lesdites tôles directrices (22, 24) étant agencées de telle sorte qu'il se forme, dans ladite chambre de traitement (16), des écoulements (34, 36) de produit et d'air de processus qui sont dirigés dans des sens opposés, viennent incider mutuellement le long d'une zone de rupture et sont déviés vers le haut dans le sens vertical, sachant qu'une buse fendue (30) à pulvérisation verticale ascendante, située dans le fond (14) dans ladite zone de rupture, est munie d'un interstice central (42) d'écoulement de liquide dont la périphérie est délimitée par deux parois (68, 70) et par l'intermédiaire duquel un liquide (38) peut être délivré, et est par ailleurs munie d'interstices (44, 46) de circulation d'air diffusé qui sont situés à côté dudit interstice central (42) d'écoulement du liquide, et par l'intermédiaire desquels de l'air diffusé (47) peut être délivré en vue de l'atomisation dudit liquide (38), **caractérisé par le fait qu'**une garniture intercalaire (72) du type peigne, logée dans l'interstice (42) d'écoulement du liquide, est interposée entre les deux parois (68, 70) de délimitation périphérique dudit interstice (42) d'écoulement du liquide, des dents (80, 80') de ladite garniture intercalaire (72) s'étendant en direction d'une embouchure (43) dudit interstice (42) d'écoulement du liquide.

2. Dispositif selon la revendication 1, **caractérisé par le fait que** la garniture intercalaire (72) est enserrée entre les deux parois (68, 70).

3. Dispositif selon la revendication 1 ou 2, **caractérisé par le fait que** la garniture intercalaire (72) est réalisée sous la forme d'une structure (74, 76) configurée en une platine du type peigne se présentant, à une extrémité, comme un dos de peigne fermé (84, 84') au-delà duquel les dents (80, 80') font saillie.

4. Dispositif selon l'une des revendications 1 à 3, **caractérisé par le fait que** la garniture intercalaire (72) est réalisée de façon telle que des espaces libres (82, 82') situés entre les dents (80, 80') constituent, dans la région du dos (84, 84') du peigne, des orifices de sortie placés côté afflux et débouchant dans l'interstice (42) d'écoulement du liquide.

5. Dispositif selon l'une des revendications 1 à 4, **caractérisé par le fait que** l'interstice (42) d'écoulement du liquide comprend une première région (45) située côté décharge, présentant la largeur interstitielle préétablie par l'épaisseur de la garniture intercalaire (72) et à laquelle se rattache, côté afflux, une seconde région (49) plus large dans laquelle ladite garniture intercalaire (72) est de réalisation plus épaisse.

6. Dispositif selon la revendication 5, **caractérisé par le fait que** la garniture intercalaire (72) est pareillement réalisée sous la forme d'une structure (76) du type peigne dans la seconde région (49).

7. Dispositif selon l'une des revendications 5 ou 6, **caractérisé par le fait que** la garniture intercalaire (72) est composée de la structure (74) du type peigne, située dans la première région (45), et de l'autre structure (76) du type peigne qui est située dans la seconde région (49).

8. Dispositif selon la revendication 7, **caractérisé par le fait que** la structure (74) du type peigne, plus mince, est insérée dans une fente longitudinale (86) pratiquée dans les dents (80') de l'autre structure (76) du type peigne, d'épaisseur supérieure.

9. Dispositif selon l'une des revendications 5 à 8, **caractérisé par le fait que** les deux parois (68, 70) sont de réalisation étagée, et sont en applique contre les faces extérieures de la garniture intercalaire (72) du type peigne à l'état assemblé.

10. Dispositif selon l'une des revendications 1 à 9, **caractérisé par le fait que** des faces extérieures (69) des parois (68, 70) matérialisent une paroi respectivement intérieure des interstices (44, 46) de circulation de l'air diffusé.

11. Dispositif selon la revendication 10, **caractérisé par le fait qu'**une paroi extérieure (62, 63), respectivement placée à distance des faces extérieures (69) des parois (68, 70), matérialise respectivement la paroi extérieure d'un interstice (44, 46) de circulation de l'air diffusé.

12. Dispositif selon l'une des revendications 1 à 11, **caractérisé par le fait que** les parois (68, 70 ; 62, 63) délimitant périphériquement l'interstice (42) d'écoulement du liquide, ainsi que les interstices (44, 46) de circulation de l'air diffusé, sont réalisées sous la forme de pièces structurelles configurées en des platines qui sont montées et bloquées sur une embase commune (54).

13. Dispositif selon la revendication 12, **caractérisé par le fait qu'**un adaptateur central (110), destiné à des fluides, est implanté sur l'embase (54).

14. Dispositif selon l'une des revendications 1 à 13, **caractérisé par le fait qu'**une pièce d'extrémité (48, 50), respectivement montée en observant dans la direction longitudinale dudit dispositif (30), marque l'achèvement du corps (40) dudit dispositif (30) aux extrémités longitudinales.

15. Dispositif selon l'une des revendications 1 à 14, **caractérisé par le fait que** des nez (94), du type dents de peigne, sont placés dans les interstices (44, 46) de circulation de l'air diffusé.

16. Dispositif selon l'une des revendications 1 à 15, **caractérisé par le fait que** des extrémités libres des dents (80) de la garniture intercalaire (72) du type peigne sont situées à distance de l'embouchure (43) de l'interstice (42) d'écoulement du liquide.

17. Dispositif selon l'une des revendications 1 à 15, **caractérisé par le fait que** des régions de parois extérieures (62, 63) de la buse fendue (30), qui font saillie vers le haut au-delà du fond (14) et sur lesquelles les écoulements (34, 36) à sens opposés viennent incider, présentent un tracé arrondi partant d'une direction horizontale et gagnant la direction verticale, afin d'amplifier un renvoi en douceur, vers la direction verticale, desdits écoulements (34) et (36) à sens opposés.

18. Dispositif selon la revendication 17, **caractérisé par le fait que** le tracé arrondi des parois extérieures (62, 63) est de forme circulaire.

19. Dispositif selon la revendication 18, **caractérisé par le fait qu'**un rayon de l'arc de cercle du tracé arrondi circulaire des parois extérieures (62, 63) représente environ de 10% à 20% d'un rayon d'une zone circulaire de rupture.

20. Dispositif selon l'une des revendications 1 à 19, **caractérisé par le fait qu'**une platine directrice du fond (14) est rapprochée des régions courbes des parois extérieures (62, 63) de la buse fendue (30), de part et d'autre, de manière qu'un interstice de passage de l'air de processus, sensiblement dirigé dans le sens horizontal, soit formé entre cette platine directrice et lesdites parois extérieures (62, 63) de la buse fendue (30).
